Europäisches Patentamt

(19) European Patent Office

Office européen des brevets

(11) Veröffentlichungsnummer : **0 003 563**
**B1**

# EUROPÄISCHE PATENTSCHRIFT

(12)

(45) Veröffentlichungstag der Patentschrift :
02.12.81

(21) Anmeldenummer : 79100294.2

(22) Anmeldetag : 01.02.79

(51) Int. Cl.³ : **G 05 D 11/13, B 29 D 27/02**

(54) Vorrichtung zum Dosieren mindestens zweier fliessfähiger Reaktionskomponenten in eine Mischkammer.

(30) Priorität : 13.02.78 DE 2805946

(43) Veröffentlichungstag der Anmeldung :
22.08.79 (Patentblatt 79/17)

(45) Bekanntmachung des Hinweises auf die Patenterteilung : 02.12.81 Patentblatt 81/48

(84) Benannte Vertragsstaaten :
BE CH DE FR GB IT NL SE

(56) Entgegenhaltungen :
DE - B - 1 111 710
DE - B - 2 700 875
FR - A - 2 301 292
US - A - 3 600 563
US - A - 3 604 903
STEUERUNGSTECHNIK,
1. Jg., 1968, Februar, nr. 1,
Mainz,
L. BOCK : « Elektrische und elektrohydraulische
Schrittmotoren »,
Seiten 13-18

(73) Patentinhaber : BAYER AG
Zentralbereich Patente, Marken und Lizenzen
D-5090 Leverkusen 1, Bayerwerk (DE)

(72) Erfinder : Juffa, Richard, Ing.-grad.
Buchholzstrasse 38
D-5000 Köln 80 (DE)
Erfinder : Boden, Heinrich
Sperberweg 14
D-5090 Leverkusen 3 (DE)

Imprimerie Jouve, 17, rue du Louvre, 75001 Paris, France

## Vorrichtung zum Dosieren mindestens zweier fließfähiger Reaktionskomponenten in eine Mischkammer

Die Erfindung betrifft eine Vorrichtung zum Dosieren mindestens zweier fließfähiger Reaktionskomponenten in einem vorgewählten Verhältnis in eine Mischkammer, bestehend aus einer Dosiereinheit je Komponente, die aufgebaut ist aus Kolben und Zylinder, einer von einem Vorratsgefäß in den Zylinder führenden Zuleitung, einer vom Zylinder zur Mischkammer führenden Ableitung und aus einer Antriebseinheit. Gegebenenfalls können noch Rücklaufleitungen für die Komponenten vorgesehen sein.

Vorrichtungen der genannten Art dienen zur Vorbereitung des Reaktionsgemisches zum Füllen von Hohlräumen, insbesondere zum Füllen der Hohlräume von Formwerkzeugen. Die derart gefertigten Formteile, wie z.B. Stoßabsorber oder Frontpartien für Kraftfahrzeuge, Armaturenbretter, haben hohen Anforderungen gerecht zu werden. Hierbei ist eine der wichtigsten Voraussetzungen, die Reaktionskomponenten, beispielsweise Polyol und Isocyanat zur Bildung von Polyurethan, im richtigen Mischungsverhältnis mit möglichst geringer Toleranz zusammenzuführen.

Man bedient sich hierbei entsprechender Vorrichtungen, die beispielsweise mit Kolben- oder Zahnradpumpen arbeiten. Sie sind sowohl in Hochdruckausführung in Verbindung mit sogenannten Injektionsmischern als auch in Niederdruckausführung in Verbindung mit Rührwerksmischern und/oder statischen Mischern bekannt.

Für die Verarbeitung hochreaktiver Reaktionssysteme mit Verfestigungszeiten unter 5 Sekunden werden vorzugsweise Hochdruckdosiervorrichtungen, die gegebenenfalls über Anbaumischköpfe direkt mit dem Formwerkzeug fest verbunden bzw. verbindbar sind, benutzt (DE-OS 19 48 999, DE-OS 23 64 501).

Als Dosierpumpen verwendet man schnell laufende Reihen-, Axial- oder Radialkolbenpumpen (DE-PS 11 49 886, DE-AS 17 78 060, DE-OS 21 46 054). Solche Pumpen werden z.B. in 6-, 7- und 10-Zylinderbauweise im Drehzahlbereich von ca. 900 bis 1 500 U/min bei Dosierdrücken bis zu 250 bar und darüber hinaus betrieben. Hohe Kolbengeschwindigkeiten und diffizile Passungen zwischen Kolben und Zylindern sowie in den Steuerorganen der Pumpen begrenzen die Viskosität der zu dosierenden Komponenten auf etwa maximal 3 000 mPa. s. Die Dosierung von füllstoffhaltigen Komponenten ist wegen des Abriebverhaltens nicht möglich. Beim gebräuchlichen Einzelantrieb für solche Pumpen durch Kurzschlußläufermotoren führen Druckänderungen im Dosiersystem zwangsläufig zu Drehzahländerungen und damit zu einer unerwünschten Beeinflussung der Dosierleistung. Weitere Nachteile solch schnell laufender Kolbenpumpen für die Formteilefertigung sind Leckageprobleme zwischen Dosierkolben und Zylindern sowie den weiteren Steuerorganen zwischen Saug- und Druckseite der Pumpen, hohe Geräuschbelästigung sowie der durch die Fördercharakteristik der Pumpen gegebene pulsierende Dosierstrom.

Als Hochdruckdosiervorrichtungen sind weiterhin Vorrichtungen mit Verdrängerkolben bekannt, mit denen hochreaktive und gegebenenfalls füllstoffhaltige oder hochviskose Zweikomponentensysteme in fest vorgegebenem Dosierverhältnis, das dem Mischungsverhältnis entspricht, verarbeitet werden können (DE-AS 22 27 559). Der Antrieb der Dosiereinheiten erfolgt hierbei durch eine fest mit ihnen verbundene Hydraulik-Kolben-Zylindereinheit. Diese Vorrichtungen erlauben eine Änderung des Dosierverhältnisses, wie sie bei Rezeptur- oder Füllstoffwechsel erforderlich ist, nur in groben Stufen. Eine frei wählbare Veränderung des Dosierverhältnisses während eines Dosierhubes ist zwar möglich, die Einstellung arbeitet jedoch sehr träge und ist abhängig von der vorgegebenen groben Stufung.

Bekannt sind auch Vorrichtungen mit zwei oder mehr Verdrängerkolbenpumpen, die über ein gemeinsames, drehbares Joch antreibbar sind (Merkblatt PY - 18 vom März 1974 der Firma Hilger u. Kern GmbH, D68 Mannheim, « Pyles-Mehrkomponenten-Verarbeitungsanlagen-Serie KMI 2 700 » und KMI 2 711). Diese lassen zwar eine kontinuierliche Veränderung des Dosierverhältnisses zu. Sie sind auch als Niederdruckgeräte bei einem Druck im Dosiersystem unterhalb 20 bar bei der Verarbeitung langsam startender Reaktionssysteme in Einsatz. Für die Hochdruckdosierung hochreaktiver Systeme bei Drücken über 200 bar werden solche Vorrichtungen nicht verwendet, denn bei einem Füllvolumen über ca. 3 l ist eine solche Konstruktion wegen der großen aufzubringenden Betätigungskräfte mit sehr hohem mechanischem Aufwand verbunden. Ein weiterer Nachteil liegt in der Lageveränderung der Dosiersysteme für die einzelnen Reaktionskomponenten zueinander bei Änderung des Dosierverhältnisses ; denn der Abstand zum Drehpunkt des Jochs ändert sich hierbei. Eine starre Koppelung der Dosiereinheiten und damit eine bei Hochdruckverarbeitung aus Sicherheitsgründen notwendige starre Verrohrung bzw. Integration aller zum Mischer führenden Hochdruckleitungen in ein gemeinsames Gehäuse ist nicht möglich. Bei beiden Systemen ist von besonderem Nachteil, daß jeder Dosiereinheit aus Sicherheitsgründen ein Druckbegrenzungselement, z.B. eine Berstscheibe oder ein federbelastetes Kugelventil, zugeordnet sein muß, da die für beide Dosiereinheiten notwendigen Antriebskräfte bei Ausfall eines dieser Systeme das andere extrem überlasten würden.

Dieser Nachteil besteht bei Vorrichtungen mit Einzelantrieb je Dosiereinheit nicht, da hier das Übersetzungsverhältnis zwischen hydraulischem Antriebskolben und Dosierkolben so ausgelegt werden kann, daß eine Überlastung durch Überschreiten eines maximal zulässigen Druckes in den Dosierhochdruckleitungen zum Mischkopf nicht mehr möglich ist.

So sind auch schon Vorrichtungen vorgeschlagen worden, bei denen die Einstellung des Dosierverhältnisses über elektronisch gesteuerte, elektrohydraulische Servoventile erfolgt. Diese Vorrichtungen bestehen aus je einer Verdrängerkolbenpumpe mit angeflanschtem hydraulischem Antriebszylinder und Servoventil für jede zu dosierende Komponente. Hierbei wird die Bewegung eines « Führungs »-Dosierkolbens abgetastet. Eine dem Dosierverhältnis entsprechende Bewegung eines oder mehrerer « Folge »-Dosierkolben wird elektronisch vorgewählt und über zugeordnete elektrohydraulische Servoventile erzwungen. Die Bewegung der « Folge »-Dosierkolben wird also nach dem « Master-Slave »-Prinzip geregelt (US-PS 3 908 862, US-PS 4 008 829). Bei diesen Geräten ist aber, zumal bei hohen Vorschubgeschwindigkeiten der Dosierkolben, eine während des gesamten Dosierhubes notwendige Konstanz der Dosierkolbengeschwindigkeiten im vorgewählten Verhältnis mit Toleranzen unter 1 % nicht möglich. Zusätzlich wirken sich Druckschwankungen sowohl für die fließfähigen Reaktionskomponenten, die beispielsweise während des Öffnungs- und Schließvorganges für die Mischköpfe entstehen, toleranzvergrößernd aus. Dies ist bedingt durch unvermeidliche Einschwingvorgänge von Hydrauliksystemen, die über Servoventile geregelt werden. Die Dosiergenauigkeit wird außerdem durch temperaturabhängige Viskositätsschwankungen des Hydrauliköles negativ beeinflußt.

Aufgabe der Erfindung ist, eine Vorrichtung zu schaffen, die eine exakte volumetrische Dosierung von fließfähigen Mehrkomponenten-Reaktionssystemen in eine Mischkammer gestattet, und zwar in frei wählbaren und exakt reproduzierbaren Dosierverhältnissen, wobei die Sollwertabweichung des Dosierverhältnisses zu jedem Zeitpunkt des Dosierhubes unter 0,5 % liegen soll, unabhängig von äußeren Einflüssen, wie beispielsweise Druckschwankungen im Hydraulik- und/oder Dosiersystem.

Die Erfindung löst diese Aufgabe dadurch, daß die Antriebseinheit jeder Dosiereinheit als elektrohydraulischer Linearverstärker ausgebildet ist, bestehend aus einem Schrittmotor für eine Steuereinrichtung, die mit einer Hydraulik-Kolben-Zylindereinheit gekoppelt ist ; und daß dem elektrohydraulischen Linearverstärker eine Steuerelektronik zugeordnet ist, die mindestens einen einstellbaren Steuerfrequenzgenerator für den einen Dosierkolben umfaßt und je einen einstellbaren Frequenzuntersetzer für jeden weiteren Dosierkolben aufweist. Elektrohydraulische Linearverstärker sind im Handel erhältlich. Sie bestehen, wie beschrieben, aus einem Schrittmotor, einer Steuervorrichtung und einer Hydraulik-Kolben-Zylindereinheit. Die Steuervorrichtung besteht beispielsweise aus einer Gewindespindel, einer Spindelmutter und einem Steuerschieber oder einem Steuerventil. Der besondere Vorteil solcher Linearverstärker liegt darin, daß die Kraft durch die Kolbenstange direkt auf das zu bewegende Maschinenteil, also auf die Dosierkolben, welche in die Dosierzylinder eintauchen, übertragbar ist. Die aufwendigen und oft mit Spiel behafteten Übertragungsmechanismen rotierender Antriebe werden dadurch vermieden. Trotzdem wird eine äußerst präzise Bewegungskontrolle bei hoher Systemsteifigkeit erreicht. Damit eignen sich solche Antriebe für spielfreie Vorschubbewegungen wie auch für exakte Positionierungen. Solche Linearverstärker sind beispielsweise beschrieben im Prospekt « Elektro-Hydraulic Linear Amplifier Model Series LVS », Wf 24, 30e, Edition 10, 1977 No. 30.23.521.2 der Firma SIG, Schweizerische Industriegesellschaft CH-8 212 Neuhausen am Rheinfall, Schweiz.

Die Anwendung solcher elektrohydraulischer Schrittmotoren ist beispielsweise für die Steuerung von Werkzeugmaschinen und zur Steuerung des Synchronlaufes mehrerer Antriebe bekannt (STEUERUNGSTECHNIK 1. Jg. 1968, Februar Nr. 1, Mainz, L. BOCK « Elektrische und elektrohydraulische Schrittmotoren », S. 15-18.). Die Anwendung für Dosiereinheiten zur Dosierung reaktionsfähiger Komponenten ist hier weder angesprochen noch nahegelegt.

Die Erfindung ermöglicht es, am Steuerfrequenzgenerator bzw. am Frequenzuntersetzer die vorgewählte Steuerfrequenz über den Schrittmotor des Linearverstärkers in analoge, exakt reproduzierbare Vorschub- und damit Dosiergeschwindigkeit umzusetzen. Damit ist der Quotient der am Steuerfrequenzgenerator und an den Frequenzuntersetzern für verschiedene Dosiereinheiten eingestellten Steuerfrequenzen — gleiche Dosierkolbendurchmesser vorausgesetzt — gleich dem volumetrischen Dosierverhältnis der Reaktionskomponenten. Da der Steuerfrequenzquotient, der dem volumetrischen Dosierverhältnis entspricht, auch bei Änderung der vorgewählten Steuerfrequenz am Steuerfrequenzgenerator gegenüber allen Frequenzuntersetzern reproduzierbar konstant bleibt, ergibt sich in besonders vorteilhafter Weise eine einfache reproduzierbare Beeinflussung der Gesamtdosiergeschwindigkeit aller Dosiereinheiten bei exakt konstantem, volumetrischem Dosierverhältnis. Zusätzlich gestattet die Vorwahl einer Impulssumme an dem Linearverstärker einer Dosiereinheit für einen Mischhub die Vorwahl eines Hubweges und damit die exakte Steuerung einer Dosiermenge. Die für die Steuerung verwendeten Steuerfrequenzen liegen zwischen 50 und 5 000 Hz, vorzugsweise zwischen 100 und 1 000 Hz. In diesen Bereichen kann die Steuerfrequenz und damit die Dosiergeschwindigkeit während eines Dosierhubes reproduzierbar verändert werden. Dadurch wird die Herstellung von Formteilen, die räumlich variierende Eigenschaften aufweisen, möglich.

Der gesamte Dosierhub ist aufgeteilt in Vorhub, eigentlichen Mischhub und Nachhub, an den sich schließlich der Rückhub, mit dem der Dosierzylinder wieder gefüllt wird, anschließt. Man wählt einen Vorhub, um beim Anfahren die Strömungsverhältnisse vor dem Beginn des Mischhubes zu stabilisieren. Während des Vorhubes werden alle Reaktionskomponenten im Kreislauf in die Vorratsbehälter zurückgeleitet. Mit dem Ende des Vorhubes beginnt der Mischhub. Während des Mischhubes werden die Reaktionskomponenten in die Mischkammern injiziert, dort vermischt und als Reaktionsgemisch in die Höhlung eines Formwerkzeuges geleitet. An den Mischhub schließt sich ein kurzer Nachhub an. Wärend des Nachhubes werden die Reaktionskomponenten wieder im Kreislauf in die Vorratsbehälter zurückgeleitet.

Die erfindungsgemäße Vorrichtung ist in einem Ausführungsbeispiel in einer Zeichnung rein schematisch dargestellt und nachstehend näher erläutert. Es zeigen :

Fig. 1 die Vorrichtung mit ausführlicher Darstellung der Steuereinrichtung, und

Fig. 2 den Aufbau eines elektrohydraulischen Linearverstärkers.

Mittels eines Vorwahlschalters 1 ist die Größe des Vorhubes einstellbar. Ein Vorwahlschalter 2 dient der Einstellung der Größe des Mischhubes. Der Nachhub ist mittels eines weiteren Vorwahlschalters 3 einstellbar. Weiterhin ist mittels eines Vorwahlschalters 4 das Verhältnis der Dosierkolbengeschwindigkeiten, das bei gleichem Durchmesser der Dosierkolben dem Mischungsverhältnis der Komponenten entspricht, vorzuwählen. Die Kolbengeschwindigkeit für den Rückhub ist mit einem Potentiometer 5 wählbar, die des Dosierhubes, der sich aus Vorhub, Mischhub und Nachhub zusammensetzt, mit einem Potentiometer 6. Schließlich ist für die Vorwahl noch der Kippschalter 7 vorhanden, der zu Beginn des Arbeitsvorganges auf « Dosierhub » zu stellen ist.

Nach den durchgeführten Vorwahlen ist die Vorrichtung startbereit :

Die Taste 8 dient dem Start des Hubes, womit über Leitungen 9, 10 das gerät 11 für die Digitalanzeige auf « 0 » stellbar ist, während über Leitungen 9, 12, 13 der Steuergenerator 14 für den Dosierhub ansprechbar ist. Über Leitungen 9, 12, 15 ist schließlich noch der Digitalvergleicher 16 für den Vorhub aktivierbar. Vom Potentiometer 6 für die Vorwahl der Dosierkolbengeschwindigkeit für den Dosierhub ist über Leitung 17 der Steuerfrequenzgenerator 14 beeinflußbar. Durch die Einstellung der Geschwindigkeit des Dosierkolbens 18 mittels des Potentiometers 6, ist die Steuerfrequenz des Steuerfrequenzgenerators 14 für den Dosierhub vorwählbar. Sie gelangt über Leitung 19, den Kippschalter 7, Leitungen 20, 21, 22 zum Eingang des Digitalanzeigegerätes 11, das den Vor- und Mischhub vierstellig anzeigt. Außerdem steht sie gleichzeitig über Leitungen 20, 21, 23, 24 dem Digitalvergleicher 16 für den Vorhub, über Leitungen 20, 21, 23, 25, 28 dem Digitalvergleicher 29 für den Nachhub zur Verfügung. Über Leitungen 20, 21, 23, 25, 30 steuert die Steuerfrequenz den Impulsleistungsverstärker 31 für den Dosierkolben 18 an, wobei vom Impulsleistungsverstärker 31 die verstärkten Impulse über Leitung 32, Kolbenüberlaufsicherung 33, Leitung 34 dem Schrittmotor 35 des elektrohydraulischen Linearverstärkers 68 zugeführt werden. Dieser treibt den Dosierkolben 18 an. Zum Antrieb des im elektrohydraulischen Linearverstärkers 69 integrierten Schrittmotors 36 für die andere Komponente gelangt die Steuerfrequenz über Leitung 19, den Kippschalter 7, Leitungen 20, 37 an einen einstellbaren Frequenzuntersetzer 38. Dieser ist vom Vorwahlschalter 4 für das Verhältnis der Kolbengeschwindigkeiten über Leitung 39 zwischen 0 und 99 % einstellbar.

Die Vorwahl des Vor-, Misch- und Nachhubes erfolgt durch Einstellung der dem jeweiligen Hub entsprechenden Impulszahl, und zwar für den Vorhub am Vorwahlschalter 1 mit Digitalvergleicher 16, für den Mischhub am Vorwahlschalter 2 mit Digitalvergleicher 27 und für den Nachhub am Vorwahlschalter 3 mit Digitalvergleicher 29.

Der Weg des Vorhubs ist auf dem Digitalanzeigegerät 11 ablesbar. Bei Übereinstimmung zwischen den in den Digitalvergleicher 16 einlaufenden Impulsen mit dem eingestellten Wert am Vorwahlschalter 1 setzt der Digitalvergleicher 16 für den Vorhub ein Signal über Leitungen 43, 44 an das Digitalanzeigegerät 11 ab und stellt dieses auf « 0 », während gleichzeitig über Leitungen 43, 45 der Digitalvergleicher 27 für den Mischhub ansprechbar ist. Mit Anlaufen des Mischhubes ist über Leitung 46 ein elektromagnetisches Hydraulikventil 47 für den Steuerkolben 48 betätigbar, das über den gesamten Mischhub erregt bleibt. Hierdurch wird der Steuerkolben 48 des Mischkopfes 49 zu Beginn des Mischhubes in die obere Totpunktlage, die der Mischstellung entspricht, gefahren, in der er während des gesamten Mischhubes verharrt.

Mit dem Ende des Mischhubes besteht zwischen der Anzahl der einlaufenden Impulse in den Digitalvergleicher 27 für den Mischhub und der am Vorwahlschalter 2 eingeschalteten Impulszahl Übereinstimmung. Als Folge hiervon wird der Stromkreis zum elektromagnetischen Hydraulikventil 47 unterbrochen und damit das Ventil 47 umgesteuert, so daß der Steuerkolben 48 des Mischkopfes 49 in die untere Totpunktlage fährt und somit der Mischvorgang durch Unterbrechung des Komponentenzuflusses in der Mischkammer 80 beendet wird. Die Betätigung des Steuerkolbens 48 erfolgt ausgehend vom Hydraulikventil 47 über die Hydraulikleitungen 78 und 79 in bekannter Weise.

Anstelle des als Ausführungsbeispiel gezeichneten hydraulisch betätigten, schiebergesteuerten Injektions-Mischkopfes sind andere gängige Mischköpfe mit hydraulischer oder pneumatischer Steuerung einsetzbar.

Außerdem wird über Leitungen 50, 51 das Digitalanzeigegerät 11 gestoppt, so daß der Nachhub ohne Anzeige abläuft, der durch Betätigung des Digitalvergleichers 29 über Leitungen 50, 52 erfolgt. Sobald die vorgegebene Anzahl von Impulsen in den Digitalvergleicher 29 eingelaufen ist, also wieder Übereinstimmung zwischen Impulsanzahl und Einstellwert des Vorwahlschalters 3 besteht, entsteht ein Signal. Dieses Signal stoppt über Leitung 53 den Steuerfrequenzgenerator 14 für den Dosierhub und setzt die Vorrichtung still.

Infolge der prozentualen Verhältnisvorwahl der Komponenten erhält der Schrittmotor 36 nur den prozentualen Anteil der Impulse des Schrittmotors 35. Der Dosierkolben 54 führt also nur den eingestellten Prozentsatz desjenigen Weges aus, den der Dosierkolben 38 zurücklegt.

Um einen neuen Dosiervorgang starten zu können, muß die Vorrichtung wieder in die Ausgangsstellung gebracht werden. Dazu ist Kippschalter 7 auf die Rückhubstellung zu bringen.

Durch die Betätigung der Taste 55 für den Rückhub ist über Leitung 56 der Steuerfrequenzgenerator 57 für den Rückhub betätigbar, der vom Potentiometer 5 über Leitung 58 die Einstellspannung für die vorgewählte Kolbengeschwindigkeit erhalten hat. Die Steuerfrequenz ist über Leitung 59, Kippschalter 7, Leitungen 20, 21, 23, 25, 30 dem Impulsleistungsverstärker 31 zuführbar, der über Leitung 32, Kolbenüberlaufsicherung 33 und Leitung 34 den Schrittmotor 35 antreibt. Gleichzeitig gelangt die Steuerfrequenz über Leitung 20, 37 an den Frequenzuntersetzer 38, von wo sie über Leitung 60, Impulsleistungsverstärker 61, Leitung 62, Kolbenüberlaufsicherung 63 und Leitung 64 den Schrittmotor 36 antreibt. Die Dosierkolben 18, 54 sind in dem vorher eingestellten Geschwindigkeitsverhältnis in die Ausgangslage zurückfahrbar. Dort betätigen die Endkontakte 65 die Endschalter 66, so daß über Leitung 67 der Steuerfrequenzgenerator 57 und damit auch die Dosierkolben 18, 54 anhaltbar sind. Die Digitalvergleicher 16, 27, 29 sind bei der Rückhubphase außer Betrieb.

Die elektrohydraulischen Linearverstärker sind mit 68, 69 bezeichnet.

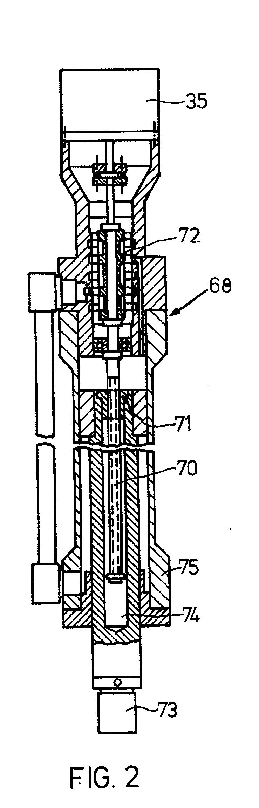

Gemäß Fig. 2 hat ein solcher elektrohydraulischer Linearverstärker 68 folgenden Aufbau: Er besteht aus einem Schrittmotor 35, einer Steuervorrichtung, die sich zusammensetzt aus einer Gewindespindel 70, einer Spindelmutter 71 und einem Steuerschieber 72, sowie aus einer Hydraulik-Kolben-Zylindereinheit, die sich zusammensetzt aus dem Kolben 73, in dessen Hohlbohrung 74 die Gewindespindel 70 über die Spindelmutter 71 geführt ist, und dem Zylinder 75.

Der elektrische Schrittmotor 35 führt beispielsweise pro Impuls einen diskreten Schritt bei 0,9° aus; d.h., nach 400 Impulsen hat er eine Umdrehung ausgeführt. Er wirkt zugleich als Steuer- und Meßsystem, ähnlich einem Schrittschaltwerk. Da ein solcher Linearverstärker 68 einen Lageregelkreis mit rotierendem Eingang bildet, ist jedem Schritt des Motors 35 ein genau definiertes Hubinkrement des Kolbens 73 zugeordnet. Es können damit, je nach Gewindesteigung der Gewindespindel 70, kleinste Hubinkremente verfahren werden, ohne daß die Position durch ein aufwendiges Meßsystem erfaßt werden müßte. Ein weiterer Vorteil dieser Betriebsart liegt darin, daß mehrere Zylinder, auch unterschiedlicher Größe, von derselben Logik gesteuert werden können, wodurch absoluter Gleichlauf erzielbar ist. Veränderliche Belastungen am Kolben 73 können nicht auf den Schrittmotor 35 zurückwirken, da die hydraulische Kolben-Zylindereinheit 73, 75 die erforderlichen Kräfte aufbringt.

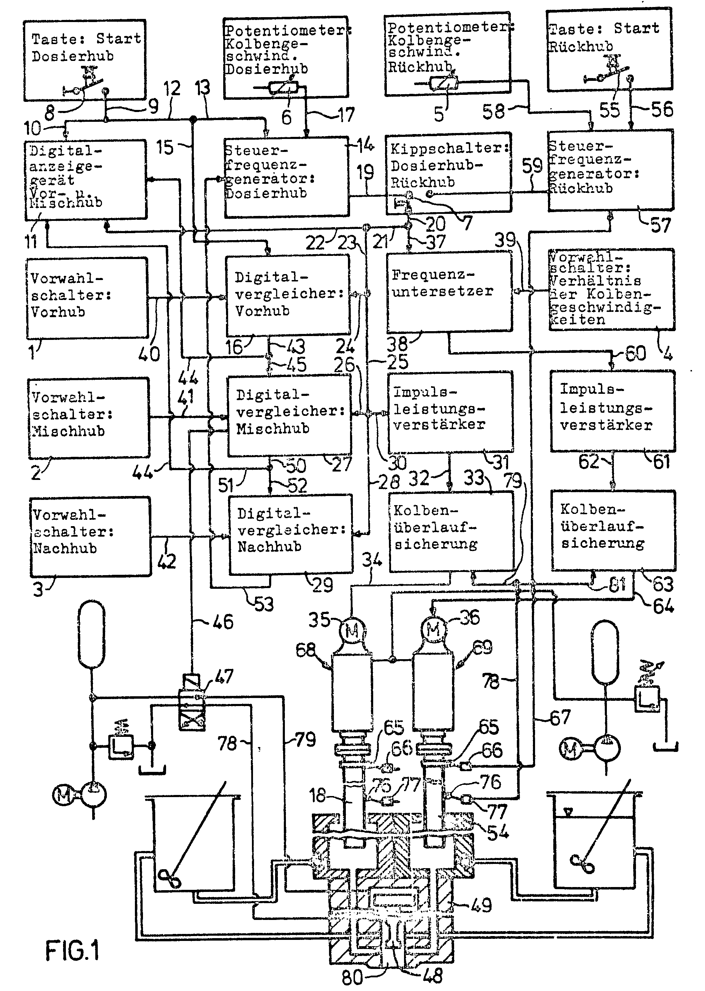

Durch einen technischen Defekt kann es passieren, daß beim Dosiervorgang die Dosierkolben 18, 54 über den vorgewählten Gesamthub hinausfahren. Um in diesem Fall die wertvolle Vorrichtung vor Zerstörung zu schützen, ist die Kolbenüberlaufsicherung 33 für den Dosierkolben 18 und die Kolbenüberlaufsicherung 63 für den Dosierkolben 54 vorgesehen (s. Fig. 1). Beim Überlaufen der Kolben 18, 54 würden von den Kontakten 76 die Endschalter 77 betätigt. Das hätte zur Folge, daß über Leitungen 78, 79, 81 die Kolbenüberlaufsicherungen 33, 63 angeregt würden, die die Steuerfrequenzen für die Schrittmotoren 35, 36 unterbrächen und somit beide Dosierkolben 18, 54 anhalten würden.

Nachstehend ist die Arbeitsweise der Vorrichtung an einem praktischen Beispiel erläutert:

1. Vorgaben durch die verwendeten Linearverstärker:

1.1 Elektrische Schrittmotoren 35, 36 mit 400 Impulsen/Umdrehung;

1.2 Steigung der Gewindespindeln 70 und Spindelmuttern 71 beträgt 40 mm.

Für die Dosierung der Komponenten sind folgende Betriebsparameter vorgegeben:

2. Einstellungen bzw. Vorgaben für die Polyol-Komponente:

2.1 Vorhub 5 cm, eingestellt am Vorwahlschalter 1, der eine zweistellige Anzeige besitzt und einen Einstellbereich von 1 bis max. 16 cm aufweist;

2.2 Mischhub 10 cm, eingestellt am Vorwahlschalter 2, der eine vierstellige Anzeige besitzt und einen Einstellbereich von 0,01 bis 20,00 cm aufweist;

2.3 Nachhub 2 cm, eingestellt am Vorwahlschalter 3, der eine zweistellige Anzeige besitzt und einen Einstellbereich von 1 cm bis max. 16 cm aufweist;

2.4 Dosier- bzw. Rückhub (d.h. Saughub) ergeben sich damit zwangsläufig zu je 17 cm;

2.5 der Durchmesser des Dosierkolbens 18 beträgt 80 mm;

2.6 Kolbenfläche: 50,265 cm²;

2.7 daraus läßt sich das Dosiervolumen der Polyolkomponente während des Mischhubes (Kolbenfläche 50,265 cm² × Mischhub 10 cm) zu 502,65 cm³ ermitteln.

3. Einstellungen bzw. Vorgaben für die Isocyanat-Komponente, die im Verhältnis zu 49 Vol.% der Polyolkomponente dosiert werden soll:

3.1 Vorhub 2,45 cm, entsprechend 49 % des Vorhubs für die Polyolkomponente, eingestellt am Vorwahlschalter 1 ;

3.2 Mischhub 4,9 cm, entsprechend 49 % des Mischhubes für die Polyolkomponente, eingestellt am Vorwahlschalter 2 ;

3.3 Nachhub 0,98 cm, entsprechend 49 % des Nachhubes für die Polyolkomponente, eingestellt am Vorwahlschalter 3 ;

3.4 Dosier- und Rückhub (d.h. Saughub) ergibt sich damit zwangsläufig zu je 8,33 cm ;

3.5 der Durchmesser des Dosierkolbens 54 beträgt 80 mm ;

3.6 Kolbenfläche : 50,265 cm² ;

3.7 das Dosiervolumen der Isocyanat-Komponente während des Mischhubes ergibt sich daraus zu 246,298 cm³.

4. Weitere Vorgaben :

4.1 Verhältnis der Kolbengeschwindigkeiten entsprechend dem Mischungsverhältnis von 49 % ebenfalls 49 %, eingestellt am Vorwahlschalter 4, der eine zweistellige Anzeige von 0 bis 99 % besitzt ;

4.2 die gewünschte Vorschub-Geschwindigkeit des Dosierkolbens 18 ist 10 cm/sec, durch Einstellung des Potentiometers 6, das eine zweistellige maximale Einstellbarkeit von 10 cm/sec aufweist, auf den Skalen-Wert 10 ;

4.3 die Vorschubgeschwindigkeit des Dosierkolbens 54 ergibt sich zwangsläufig zu 49 % derjenigen des Dosierkolbens 18 mit 4,9 cm/sec ;

4.4 das gewünschte Gesamtdosiervolumen während des Mischhubes, das sich aus dem Produkt der Hubwege mit den Kolbenflächen ergibt, ist 748,95 cm³ ;

4.5 gewünschte Rückhubzeit 6 sec, sie ist einstellbar am Potentiometer 5, über

4.6 die gewünschte Rückhubgeschwindigkeit des Dosierkolbens 18. Sie wird eingestellt am Potentiometer 5, das eine zweistellige maximale Einstellbarkeit von 10 cm/sec aufweist, auf 3,6 cm/sec, entsprechend Skalen-Wert 3,6.

4.7 Die Rückhubgeschwindigkeit des Dosierkolbens 54 ergibt sich zwangsläufig zu 49 % derjenigen des Dosierkolbens 18, mit 1,734 cm/sec.

Nachdem der Kippschalter 7 auf « Vorhub » gestellt ist, also der Steuergenerator 14 über Kippschalter 7 mit Leitung 20 verbunden ist, ist die Vorrichtung betriebsbereit.

Bezüglich des Arbeitsablaufes wird auf die Beschreibung des Zeichnungsbeispiels verwiesen, so daß nachstehend nur darüber hinausgehende Informationen wiedergegeben werden :

Die Einstellung des Potentiometers 6 auf Skalenwert 10 entspricht einer Steuerfrequenz von 1 KHz am Schrittmotor 35. Es entsteht damit ein Impulsabstand von $t = 1/f = 1/1 = 1$ ms.

Da der Schrittmotor 35 pro Impuls um 0,9° dreht, wird der Dosierkolben in 1 ms um 0,1 mm vorgeschoben. Er bewegt sich also mit einer Geschwindigkeit von 10 cm/sec. Der Schrittmotor 36 erhält nur 49 % der Steuerfrequenz des Schrittmotors 35, das sind 0,49 KHz. Damit beträgt der Impulsabstand $t = 1/f = 1/0,49 = 2,04$ ms. Das entspricht einer Geschwindigkeit des Dosierkolbens 54 von 4,9 cm/sec, da auch der Schrittmotor 36 pro Impuls um 0,9° dreht und den Dosierkolben 54 in 2,04 ms um 0,1 mm vorschiebt. Dementsprechend wird gemäß Beispiel während des gesamten, aus Vorhub, Mischhub und Nachhub bestehenden Dosiervorganges ein Dosierverhältnis von 2,04 : 1 entsprechend 100 : 49 aufrechterhalten. Dem Digitalvergleicher 16 für den Vorhub müssen entsprechend der Vorhubvorwahl von 5 cm bei einem Vorschub von 10 cm/sec 500 Impulse zulaufen, um Übereinstimmung zu erzielen. Dem Digitalvergleicher 27 für den Mischhub werden entsprechend der Mischhubvorwahl von 10 cm bei einem Vorschub von 10 cm/sec 1 000 Impulse zugeführt, um Übereinstimmung zu erzielen. Dem Digitalvergleicher 29 für den Nachhub schließlich werden entsprechend der Nachhubvorwahl von 2 cm bei einem Vorschub von 10 cm/sec 200 Impulse zugeführt, um Übereinstimmung zu erzielen.

**Anspruch**

Vorrichtung zum Dosieren mindestens zweier fließfähiger Reaktionskomponenten in einem vorgewählten Verhältnis in eine Mischkammer (80), bestehend aus einer Dosiereinheit je Komponente, die aufgebaut ist aus Kolben (18, 54) und Zylinder, einer von einem Vorratsgefäß in den Zylinder führenden Zuleitung, einer vom Zylinder zur Mischkammer führenden Ableitung und aus einer Antriebseinheit, dadurch gekennzeichnet, daß die Antriebseinheit jeder Dosiereinheit als elektrohydraulischer Linearverstärker (68, 69) ausgebildet ist, bestehend aus einem Schrittmotor (35, 36) für eine Steuereinrichtung (70, 71, 72), die mit einer Hydraulik-Kolben-Zylindereinheit (73, 75) gekoppelt ist ; und daß dem elektrohydraulischen Linearverstärker (68, 69) eine Steuerelektronik zugeordnet ist, die mindestens einen einstellbaren Steuerfrequenzgenerator (14, 57) für den einen Dosierkolben (18) umfaßt und je einen einstellbaren Frequenzuntersetzer (38) für jeden weiteren Dosierkolben (54) aufweist.

**Claim**

An apparatus for metering at least two flowable reaction components, in a preselected ratio into a mixing chamber (80), comprising one metering unit for each component, which unit comprises a piston (18, 54) and cylinder, a feed pipe leading from a storage container into the cylinder, a delivery pipe leading from the cylinder to the mixing chamber, and a drive unit, characterised in that the drive unit of each metering unit is in the form of an electro-hydraulic linear amplifer (68, 69), comprising a stepping motor (35, 36) for a control mechanism (70, 71, 72) which is coupled to a hydraulic piston and cylinder unit (73, 75) ; and in that the electro-hydraulic linear amplifier (68, 69) is provided with control electronics which comprise at least one adjustable control frequency generator (14, 57) for the one metering piston (18) and an adjustable frequency reducer (38) for the or each other metering piston (54).

**Revendication**

Dispositif destiné au dosage d'au moins deux constituants réactionnels fluides dans une chambre de mélange (80) selon un rapport présélectionné et se composant d'une unité doseuse par constituant, formée d'un piston (18, 54) et d'un cylindre, ainsi que d'un conduit d'admission menant d'un réservoir au cylindre, d'un conduit d'émission menant du cylindre à la chambre de mélange et d'une unité d'entraînement, caractérisé en ce que l'unité d'entraînement de chaque unité doseuse est réalisée comme un amplificateur linéaire électrohydraulique (68, 69) se composant d'un moteur pas à pas (35, 36) pour un dispositif de commande (70, 71, 72) couplé à une unité hydraulique à cylindre et piston (73, 75), et en ce qu'on a adjoint, à l'amplificateur linéaire électrohydraulique (68, 69), une section électronique de commande qui comprend au moins un générateur de fréquence pilote réglable (14, 57) pour l'un des pistons doseurs (18) et qui présente un démultiplicateur de fréquence réglable (38) pour chaque autre piston doseur (54).

FIG.1

FIG. 2